# EUROPÄISCHE PATENTSCHRIFT

(11) **EP 0 950 846 B1**
(45) Veröffentlichungstag und Bekanntmachung des Hinweises auf die Patenterteilung: **26.03.2008**
(21) Anmeldenummer: 99106959.2
(22) Anmeldetag: 08.04.1999
(51) Int. Cl.: F16L 33/207, F16L 25/02, F16L 13/14, B21D 39/04

(54) **Leitungssystem**
Piping system
Système de tuyauterie

(30) Priorität: 05.10.1998 DE 19845720; 17.04.1998 DE 19817136
(43) Veröffentlichungstag der Anmeldung: 20.10.1999
(73) Patentinhaber: Herz Armaturen Ges.m.b.H., 1232 Wien (AT)
(72) Erfinder: Jäggi, Georg, 2572 Kaumberg (AT)
(74) Vertreter: Schwabe - Sandmair - Marx

(56) Entgegenhaltungen:
- EP-A- 0 728 979
- WO-A-94/19641
- DE-U- 29 619 501
- DE-U- 29 701 223
- DE-U- 29 711 313
- US-A- 5 413 147

## Beschreibung

Die Erfindung betrifft ein Leitungssystem nach dem Oberbegriff des Anspruchs 1.

Bei einem aus der DE-G-91 10 998.1 bekannten Leitungssystem dieser Art kommt ein im wesentlichen hohlzylindrisches Anschlusselement mit einem Anschlag in Form eines die Zylinderachse umlaufenden Bundes zum Einsatz. Zur Herstellung einer Verbindung zwischen dem Verbundrohr und dem Anschlusselement wird zunächst eine Presshülse auf das Verbundrohr aufgeschoben, dann das Verbundrohr zusammen mit der Presshülse auf einen Anschlussbereich des Anschlusselementes aufgeschoben und Schließlich das Verbundrohr zusammen mit der Presshülse auf dem Anschlussbereich verpresst. Der die Anlagefläche für eine Stirnfläche des Verbundrohres bildende Anschlag des Anschlusselementes dient dabei zur genauen Positionierung des Verbundrohres auf dem Anschlussbereich. Im Hinblick auf die Tatsache, dass ein direkter Kontakt zwischen einer Metalleinlage des Verbundrohres und der Anlagefläche des Anschlags ein korrosionsförderndes galvanisches Element bildet, wird in der genannten Schrift vorgeschlagen, in Fällen, in denen ein Korrosionsschutz erforderlich ist, eine Kunststoffscheibe zwischen der Stirnfläche des Verbundrohres und der Anlagefläche anzuordnen. Bei der Installation der bekannten Leitungssysteme hat es sich gezeigt, dass die Handhabung einzelner Kunststoffscheiben Schwierigkeiten bereitet und daher bei der Installation häufig auf den Einbau dieser Kunststoffscheiben verzichtet wird. Aus diesem Grund werden bei bekannten Leitungssystemen der eingangs beschriebenen Art häufig schon kurz nach der Installation Korrosionsschäden beobachtet.

Das DE-U-29 711 311 offenbart eine Presshülse aus einem metallischen Material, das unmittelbar am Bund eines Fittings festgelegt ist. In der Presshülse oder einer Stützhülse, auf die das Rohr aufgeschoben wird, ist eine Stufe vorgesehen, gegen die ein einzuschiebendes bzw. eingeschobenes Verbundrohr anläuft. Das damit veröffentlichte Leitungssystem entspricht dem Oberbegriff des Anspruchs 1.

Gemäß der WO-A-94 19 641 wird ein Rohr auf eine Stützhülse aufgeschoben und über eine Verpressung festgelegt. Die hier verpresste Presshülse ist an dem Material der Stützhülse bzw. nahe dem Anschlag an der Stützhülse ebenfalls durch Verpressung festzulegen.

Laut der US-A-5,413,147 wird die Presshülse über einen radial einwärts erstreckten Flügel, der vollumfänglich verläuft, an der Stützhülse bzw. am Anschlag der Stützhülse festgelegt. Auch hier wird ein Kontakt zwischen der Metallschicht des Verbundrohres und dem Anschlag vermieden, jedoch kann bei einer Beschädigung der äußeren Kunststoffschicht des Verbundrohres ein galvanischer Kontakt zwischen der Metallschicht des Verbundrohres und der Presshülse wieder nicht vermieden werden.

Im Hinblick auf diesen Mangel wird in der EP 0 611 911 B1 ein Leitungssystem vorgeschlagen, bei dem der Kunststoffring an der Presshülse form- und/oder kraft- und/oder stoffschlüssig gehalten ist. Mit dieser Maßnahme wird die Installation des Leitungssystems vor Ort deutlich erleichtert. Die Herstellung von mit einem Kunststoffteil versehenen Presshülsen erfordert jedoch einen zusätzlichen Arbeitsgang, nämlich die Festlegung des Kunststoffteils an der Presshülse, und ist daher vergleichsweise teuer.

Angesichts dieser Probleme im Stand der Technik liegt der Erfindung die Aufgabe zugrunde, ein Leitungssystem der eingangs angegebenen Art bereitzustellen, das unter Gewährleistung eines zufrieden stellenden Korrosionsschutzes einfach hergestellt und installiert werden kann.

Zur Lösung dieser Aufgabe wird ein Leitungssystem mit den Merkmalen des Anspruchs 1 vorgeschlagen. Zweckmäßige Ausgestaltungen gehen aus den Unteransprüchen hervor.

Auch die Installation des erfindungsgemäßen Leitungssystems ist im Vergleich zur Installation der herkömmlichen Leitungssysteme besonders einfach, weil vollständig auf die Handhabung zusätzlicher Kunststoffelemente verzichtet werden kann. Schließlich bietet das erfindungsgemäße Leitungssystem einen zuverlässigen Korrosionsschutz, weil die Herstellung eines korrosionsfördernden Kontaktes zwischen der Metalleinlage des Verbundrohres und der Anlagefläche des Anschlagelementes bereits durch die Anpassung der Anlagefläche des Anschlags an die Abmessungen des Verbundrohres verhindert wird.

Für die Herstellung erfindungsgemäßer Leitungssysteme geeignete Verbundrohre weisen zweckmäßigerweise eine koaxial zur Rohrachse verlaufende Kunststoffschicht auf, die den an die Anlagefläche anlegbaren Teil der Stirnfläche bildet. Zur Herstellung von Leitungssystemen, die einerseits einen Korrosionsschutz und andererseits eine ausgezeichnete Druckfestigkeit bieten, hat es sich als besonders zweckmäßig erwiesen, wenn das Verbundrohr zwei koaxial zur Rohrachse verlaufende Kunststoffschichten aufweist, zwischen denen eine Metallarmierung angeordnet ist. Derartige Verbundrohre können sowohl in Form starrer Rohre als auch in Form flexibler Schläuche vorliegen.

Im Hinblick auf die Installation eines erfindungsgemäßen Leitungssystems hat es sich als besonders zweckmäßig erwiesen, wenn das Anschlußelement einen etwa kreiszylindermantelförmigen Anschlußbereich aufweist, auf den das Verbundrohr aufgeschoben werden kann. Bei Verwendung derartiger Anschlußelemente kann der Anschlag die Form eines die Zylinderachse umlaufenden Bundes aufweisen. Wenn das Verbundrohr auf den Anschlußbereich des Anschlußelementes aufgeschoben werden soll, kann eine weitere Verbesserung des Korrosionsschutzes erreicht werden, wenn die den an die Anlagefläche anlegbaren Teil der Stirnfläche bildende Kunststoffschicht eine innere Begrenzungsfläche des Verbundrohres bildet, weil so ein direkter Kontakt zwischen Metallteilen des Verbundrohres und dem im allgemeinen ebenfalls aus einem elektrisch leitfähigen Material gebildeten Anschlußbereich des Anschlußelementes verhindert wird. Bei dieser Ausführungsform der Erfindung ist der Außendurchmesser der die innere Begrenzungsfläche des Verbundrohres bildenden Kunststoffschicht zweckmäßigerweise mindestens genauso groß wie der Außendurchmesser der Anlagefläche.

Zur Erleichterung der Montage eines erfindungsgemäßen Leitungssystems hat es sich ferner als besonders vorteilhaft erwiesen, wenn zumindest ein radial innen liegender Bereich der Stirnfläche des Verbundrohres einen spitzen Winkel mit der Rohrachse einschließt vorzugsweise etwa kegelstumpfförmig gebildet ist, weil dadurch das Aufschieben des Verbundrohres auf das Anschlussteil erleichtert wird. Zur Anpassung des Anschlags an ein derartiges Verbundrohr hat es sich als besonders vorteilhaft erwiesen, wenn auch die Anlagefläche des Anschlags zumindest teilweise einen spitzen Winkel mit der Rohrachse einschließt, vorzugsweise ebenfalls kegelstumpfförmig gebildet ist.

Da das erfindungsgemäße Leitungssystem eine zur Festlegung des Verbundrohres auf dem Anschlusselement dienende, auf das Verbundrohr aufschiebbare und plastisch verformbare Presshülse aufweist ist die Presshülse am Anschlusselement festlegbar, weil dann bei der Installation nur zwei Bauelemente gehandhabt werden müssen, nämlich das Verbundrohr und das Anschlusselement mit der daran festgelegten Presshülse. Bei dieser Anordnung kann die eine korrekte Positionierung des Verbundrohres auf dem Anschlussbereich des Anschlusselementes gewährleistende Anlage der Stirnfläche des Verbundrohres an der Anlagefläche des Anschlags besonders einfach kontrolliert werden, wenn das dem Anschlag zugewandte Ende der am Anschlusselement festgelegten Presshülse einen axialen Abstand von der Anlagefläche aufweist. Mit dieser Anordnung kann die Kontrolle der Anlage der Stirnfläche des Verbundrohres an der Anlagefläche des Anschlags besonders einfach erfolgen, wenn das Leitungssystem ein zumindest teilweise durchsichtiges Verbindungselement aufweist, das einerseits am Anschlusselement und andererseits an der Presshülse festlegbar ist. Dieses Verbindungselement kann beispielsweise in Form eines den an die Anlagefläche angrenzenden Teil des Anschlussbereichs übergreifenden, transparenten Kunststoffringes verwirklicht werden.

Ein derartiges Verbindungselement kann besonders zuverlässig am Anschlußelement festgelegt werden, wenn es einen radial nach innen ragenden, vorzugsweise umlaufenden Steg aufweist, der in einer vorzugsweise umlaufenden Nut des Anschlußelementes aufgenommen ist. Insbesondere bei der zuletzt beschriebenen Ausführungsform der Erfindung kann die Befestigung des Verbindungselementes erleichtert werden, wenn es über einen einen spitzen Winkel mit der Rohrachse einschließenden, vorzugsweise etwa kegelstumpfförmigen Außenflächenbereich des Anschlußelementes auf das Anschlußelement aufschiebbar ist.

In besonders vorteilhafter Ausgestaltung der Erfindung werden die eingangs angesprochenen Probleme im Stand der Technik durch eine Weiterbildung der bekannten Anschlußelemente gelöst, die im wesentlichen dadurch gekennzeichnet ist, daß der Anschlag zumindest im Bereich der Anlagefläche aus einem elektrisch isolierenden Material gebildet ist.

Diese Lösung geht auf die verblüffend einfache Erkenntnis zurück daß alle vorstehend erläuterten Probleme im Stand der Technik ihre Ursache in der bislang üblichen Verwendung von Anschlußelementen mit Anschlägen aus einem elektrisch leitfähigen Material finden. Erst durch Verwendung derartiger Anschläge kann es überhaupt zur Bildung eines korrosionsfördernden galvanischen Elementes kommen. Bei dem gemäß einer besonders bevorzugten Ausführungsform der Erfindung vorgeschlagenen Anschlußelement wird diese Gefahr von vorneherein dadurch ausgeschlossen, daß der Anschlag zumindest im Bereich der Anlagefläche aus einem elektrisch isolierenden Material gebildet ist. Weiter erfordert diese Weiterbildung zur Sicherstellung eines zufriedenstellenden Korrosionsschutzes auch keine Anpassung zwischen dem Anschlußelement und dem Verbundohr. Daher kann das erfindungsgemäße Anschlußelement in Verbindung mit beliebigen Verbundrohren eingesetzt werden.

Wenngleich im Rahmen dieser Erfindung auch daran gedacht ist, bereit vorhandene Anschlußelemente im Bereich der Anlageflächen ihrer Anschläge mit einem geeigneten Kunststoff zu beschichten, hat es sich als besonders zweckmäßig erwiesen, wenn der Anschlag vollständig aus einem elektrisch isolierenden Material gebildet ist. Dadurch wird eine erhöhte Betriebszuverlässigkeit erreicht, weil selbst bei leichten Beschädigungen des Anschlags die ansonsten zu besorgende Bildung eines galvanischen Elementes nicht befürchtet werden muß.

Wie vorstehend bereits erläutert, hat es sich im Hinblick auf die Installation eines Leitungssystems als besonders zweckmäßig erwiesen, wenn das erfindungsgemäße Anschlußelement einen etwa kreiszylindermantelförmigen Anschlußbereich aufweist, auf den das Verbundrohr aufgeschoben werden kann. Zur zuverlässigen Vermeidung der Entstehung eines korrosionsfördernden galvanischen Elementes hat es sich als besonders vorteilhaft erwiesen, wenn auch der Anschlußbereich aus einem elektrisch isolierenden Material gebildet ist. Dabei ist es herstellungstechnisch bevorzugt, wenn der Anschlußbereich einstückig mit dem Anschlag gebildet ist.

Das erfindungsgemäße Anschlußelement kann beispielsweise ein in Form eines T-Stückes mit insgesamt drei Anschlußbereichen und drei diesen zugeordneten Anschlägen gebildet sein.

Aus Kostengründen ist es besonders vorteilhaft, wenn mindestens einer der Anschläge und/oder mindestens einer der Übergangsbereiche aus Kunststoff gebildet ist. Dabei kann eine im Hinblick auf die bei der Verpressung der Preßhülse auftretenden Kräfte hinreichende Festigkeit sichergestellt werden, wenn ein glasfaserverstärkter Kunststoff eingesetzt wird. Die Verwendung derartiger Kunststoffe hat den weiteren Vorteil, daß glasfaserverstärkte Kunststoff mit einer lebensmittelrechtlichen Zulassung für einen direkten Kontakt mit Trinkwasser ohne weiteres verfügbar sind. Bei Verwendung derartiger Kunststoffe bleiben Geruch, Geschmack und Schäumverhalten des Grundwassers auch bei hohen Kontakttemperaturen unbeeinträchtigt. Zudem bleiben Festigkeit und Steifigkeit derartiger Kunststoffe selbst bei hohen Temperaturen von 95°C weitgehend erhalten.

Nachstehend wird die Erfindung unter Bezugnahme auf die Zeichnung, auf die hinsichtlich aller erfindungswesentlichen und in der Beschreibung nicht näher herausgestellten Einzelheiten ausdrücklich verwiesen wird, erläutert. In der Zeichnung zeigen:
- Fig. 1: einen Axialschnitt durch ein Leitungssystem gemäß einer ersten Ausführungsform der Erfindung,
- Fig. 2: einen Axialschnitt durch ein Leitungssystem gemäß einer zweiten Ausführungsform der Erfindung,
- Fig. 3: eine teilweise geschnittene Darstellung eines Anschlußelementes mit daran festgelegten Verbindungselementen und Preßhülsen gemäß einer dritten Ausführungsform der Erfindung,
- Fig. 4: eine Detaildarstellung des in Fig. 3 dargestellten Anschlußelementes und
- Fig. 5: eine teilweise geschnittene Darstellung eines mit Preßhülsen ausgestatteten Anschlußelementes gemäß einer vierten Ausführungsform der Erfindung.

In der folgenden Besschreibung bevorzugter Ausführungsformen der Erfindung werden zur Bezeichnung einander entsprechender Teile der verschiedenen Ausführungsformen gleiche Bezugszeichen benutzt.

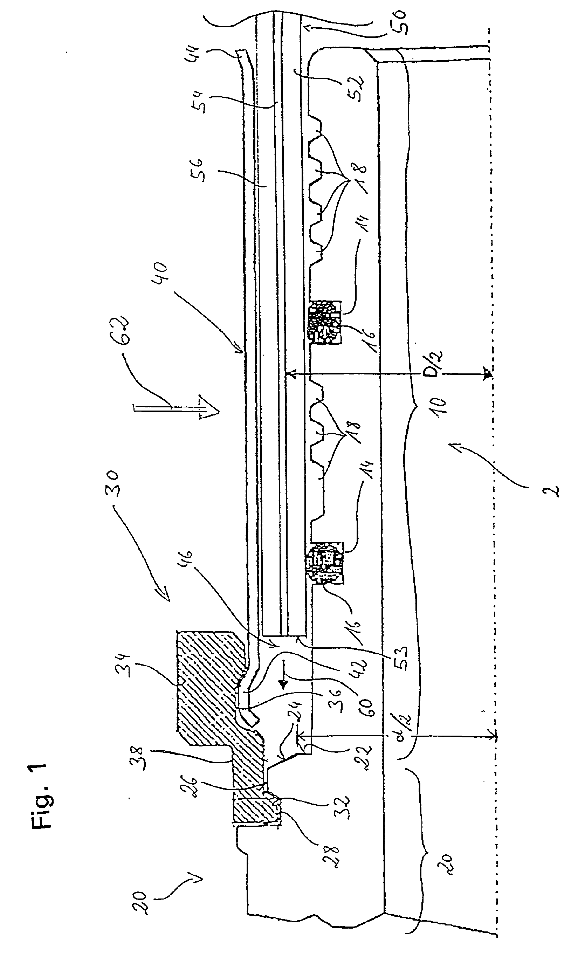

Das in Fig. 1 dargestellte Leitungssystem umfaßt im wesentlichen ein Anschlußelement 2, einen transparenten Kunststoffring 30 eine Preßhülse 40 und ein Metall-Kunststoff-Verbundrohr 50. Das Anschlußelement besteht im wesentlichen aus einem etwa kreiszylindermantelförmigen Anschlußbereich 10 und einem Anschlag 20 in Form eines die Zylinderachse des Anschlußbereichs 10 umlaufenden Bundes. Der Anschlußbereich 10 ist mit zwei in axialem Abstand voneinander die Zylinderachse umlaufenden Nuten 14 versehen, in die O-Ringe 16 eingelegt sind. Ferner ist der Bereich zwischen den Nuten 14 und der dem dem Anschlag 20 abgewandten Ende benachbarte Bereich der Außenfläche des Anschlußbereichs 10 mit einer Profilierung in Form von in axialem Abstand voneinander angeordneten Nuten 18 mit trapezförmigem Querschnitt versehen.

Die Begrenzungsfläche des Anschlags 20 weist angrenzend an die äußere Begrenzungsfläche des Anschlußbereiches 10 eine einen rechten Winkel mit der Zylinderachse einschließende Anlagefläche 22, eine einen spitzen Winkel mit der Zylinderachse einschließende Fase 24 und eine parallel zur Zylinderachse verlaufende Außenfläche 26 auf. An der der Anlagefläche 22 entgegengesetzten Seite der Außenfläche 26 ist der Anschlag 20 mit einer umlaufenden Nut 28 versehen.

In der Nut 28 ist ein radial nach innen ragender Steg 32 des Kunststoffrings 30 aufgenommen. An seinem dem radial nach innen ragenden Steg 32 entgegengesetzten Ende ist der Kunststoffring 30 mit einem radial nach außen ragenden, umlaufenden Steg 34 versehen. Der radial nach außen ragende Steg 34 weist auf seiner dem Anschlußbereich 10 zugewandten Seite eine umlaufende Nut 36 auf. Zwischen dem radial nach innen ragenden Steg 32 und dem radial nach außen ragenden Steg 34 ist der Kunststoffring 30 mit einem Bereich 38 geringer Wandstärke versehen.

In die Nut 36 des Kunststoffrings 30 ist ein radial erweiterter Bereich 42 der im übrigen im wesentlichen kreiszylindermantelförmigen Preßhülse 40 aufgenommen. An ihrem dem radial erweiterten Bereich 42 entgegengesetzten Ende ist die Preßhülse 40 mit einem radial nach außen abgebogenen Endbereich 44 versehen.

Das Anschlußelement 2, der Kunststoffring 30 und die Preßhülse 40 bilden ein Bauelement, bei dem die Preßhülse 40 über den Kunststoffring 30 am Anschlußelement gehalten ist, wobei zwischen der Preßhülse 40 und der Außenfläche des Anschlußbereichs 10 ein Ringspalt 46 angeordnet ist. In diesen Ringspalt 46 kann das Metall-Kunststoff-Verbundrohr 50 in der durch den Pfeil 60 bezeichneten Richtung eingeführt werden.

Das Verbundrohr 50 weist zwei koaxial zur Rohrachse verlaufende Kunststoffschichten 52 und 56 auf, zwischen denen eine Metallarmierung 54 angeordnet ist. Diese Metallarmierung 54 kann beispielsweise in Form eines in eine der Kunststoffschichten 52 und 56 eingebetteten Metallgewebes vorliegen. Bei der in der Zeichnung dargestellten Ausführungsform der Erfindung weist die innenliegende Kunststoffschicht 52 des Verbundrohrs 50 einen Außendurchmesser D auf, der größer ist als der Außendurchmesser d der Anlagefläche 22 des Anschlags 20. Auf diese Weise wird unter Gewährleistung einer zuverlässigen Positionierung des Verbundrohres 50 auf dem Anschlußbereich 10 durch Anlegen der Stirnfläche 53 der Kunststoffschicht 52 an die Anlagefläche 22 ein korrosionsfördernder direkter Kontakt zwischen der Metallarmierung 54 und dem Anschlag 20 zuverlässig verhindert.

Die korrekte Anlage der Stirnfläche 53 der inneren Kunststoffschicht 52 des Verbundrohres 50 an der Anlagefläche 22 des Anschlags 20 kann durch den Bereich 38 geringer Wandstärke des transparenten Kunststoffrings 30 optisch kontrolliert werden. Zur Befestigung des in den Ringspalt 46 eingeführten Verbundrohrs 50 wird die Preßhülse 40 zusammen mit dem Verbundrohr 50 mit einem in der Zeichnung nicht dargestellten Preßwerkzeug in der durch den Pfeil 62 angedeuteten Richtung radial nach innen verpreßt. Während des Preßvorgangs wird ein Teil der Kunststoffschicht 52 des Verbundrohres 50 in die umlaufenden Nuten 18 des Anschlußbereichs 10 gedrängt, wodurch eine axiale Verschiebung des Verbundrohrs 50 in dem Ringspalt 46 zuverlässig verhindert werden kann. Mit dem radial nach außen ragenden umlaufenden Steg 34 des Kunststoffrings 30 kann das Preßwerkzeug während des Preßvorgangs lagerichtig geführt werden.

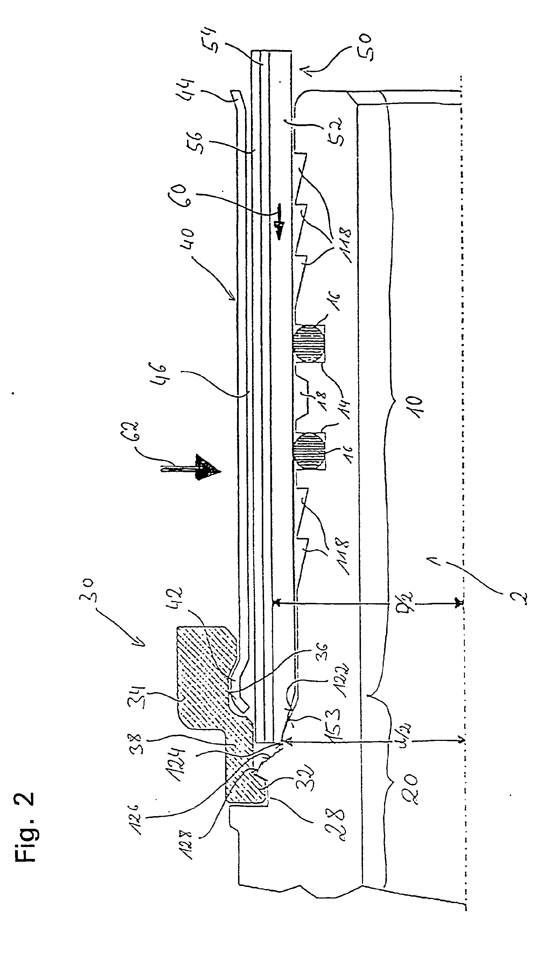

Im Unterschied zu der anhand der Fig. 1 erläuterten ersten Ausführungsform der Erfindung ist bei der in Fig. 2 dargestellten zweiten Ausführungsform der Erfindung ein von der inneren Kunststoffschicht 52 des Verbundrohres 50 gebildeter, radial innen liegender Bereich 153 der Stirnfläche des Verbundrohrs in Form eines Kegelstumpfmantels gebildet, der sich in Richtung auf das Ende des Verbundrohres öffnet. Auf diese Weise wird das Aufschieben des Verbundrohres 50 auf den Anschlußbereich 10 des Anschlußelementes 2 erleichtert. In Anpassung an den Stirnflächenbereich 153 des Verbundrohres 50 ist auch die Anlagefläche 122 des Anschlags 20 in Form einer Mantelfläche eines Kegelstumpfes gebildet. Im Anschluß an die Anlagefläche 122 weist der Anschlag 20 der in Fig. 2 dargestellten Ausführungsform der Erfindung einen parallel zur Rohrachse verlaufenden Außenflächenbereich 124 auf, der in eine einen spitzen Winkel mit der Zylinderachse einschließende, ebenfalls in Form eines Kegelstumpfmantels gebildete Fase 126 übergeht, an die sich eine in Form eines Mantels eines Kegelstumpfes mit geringerem Öffnungswinkel gebildete Fase 128 anschließt, die schließlich in die den nach innen ragenden Steg 32 des Kunststoffrings 30 aufnehmende Nut 28 übergeht. Durch die Fasen 126 und 128 kann die Festlegung des Kunststoffrings 30 am Anschlußelement 2 erleichtert werden, weil diese Fasen ein einfaches Aufschieben des Kunststoffrings 30 auf das Anschlußelement 10 erlauben, bis der nach innen ragende Steg 32 in die Nut 28 einrastet. Durch den parallel zur Rohrachse verlaufenden Außenflächenbereich 124 des Anschlags 20 wird ein direkter Kontakt zwischen der Metallarmierung 54 des an der Anlagefläche 122 anliegenden Verbundrohres 50 und dem Anschlag 20 zuverlässig verhindert.

Weiter unterscheidet sich die in Fig. 2 dargestellte Ausführungsform der Erfindung von der in Fig. 1 dargestellten Ausführungsform der Erfindung dadurch, daß der dem dem Anschlag 20 abgewandten Ende benachbarte Bereich der Außenfläche des Anschlußbereichs 10 mit einer Profilierung in Form von Nuten 118 mit trapezförmigem Querschnitt versehen ist. Ähnliche Nuten sind auch zwischen der dem Anschlag 20 benachbarten Nut 14 und dem Anschlag 20 selbst vorgesehen. Durch diese Form der die Profilierung des Anschlußbereichs 12 bildenden Nuten 118 kann eine axiale Verschiebung des Verbundrohres 50 in dem Ringspalt 46 in der der durch den Pfeil 60 angegebenen Einschubrichtung entgegengesetzten Richtung zuverlässig verhindert werden.

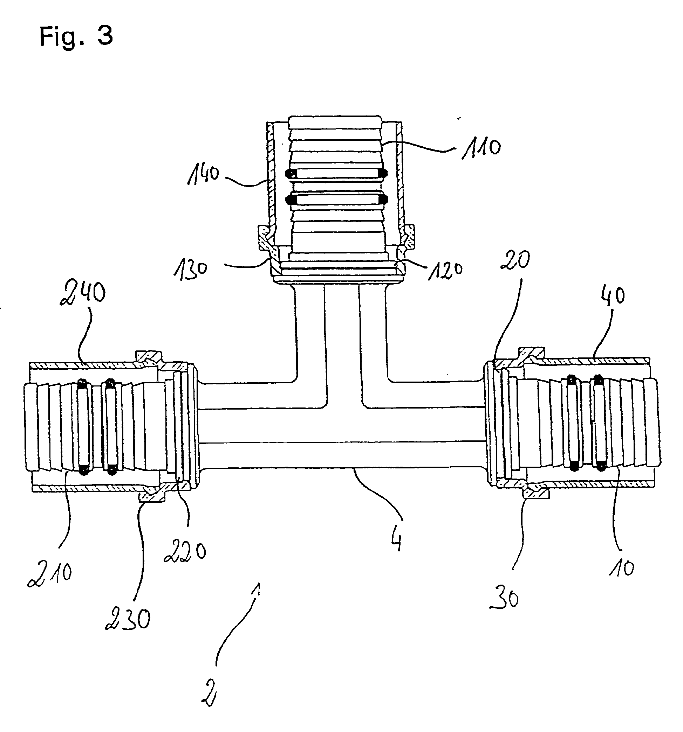

Die in Fig. 3 dargestellte dritte Ausführungsform der Erfindung ist in Form eines T-Stückes gebildet und weist drei zum Ankoppeln jeweils eines Verbundrohes dienende, im wesentlichen kreiszylindermantelförmige Anschlußbereiche 10, 110 und 210 auf, die über ein T-förmiges Rohrstück 4 miteinander verbunden sind. Jedem der Anschlußbereiche 10, 110 und 210 ist ein Anschlag 20, 120 bzw. 220 zugeordnet, der zur Positionierung eines auf den entsprechenden Anschlußbereich aufgeschobenen Verbundrohres dient. Das T-förmige Rohrstück 4 ist einstückig mit den Anschlußbereichen 10, 110 und 210 sowie den diesen zugeordneten Anschlägen 20, 120 und 220 aus glasfaserverstärktem Kunststoff hergestellt. An jedem der Anschläge 20, 120 und 220 ist über einen entsprechenden transparenten Kunststoffring 30, 130 bzw. 230 einer Preßhülse 40, 140 bzw. 240 festgelegt.

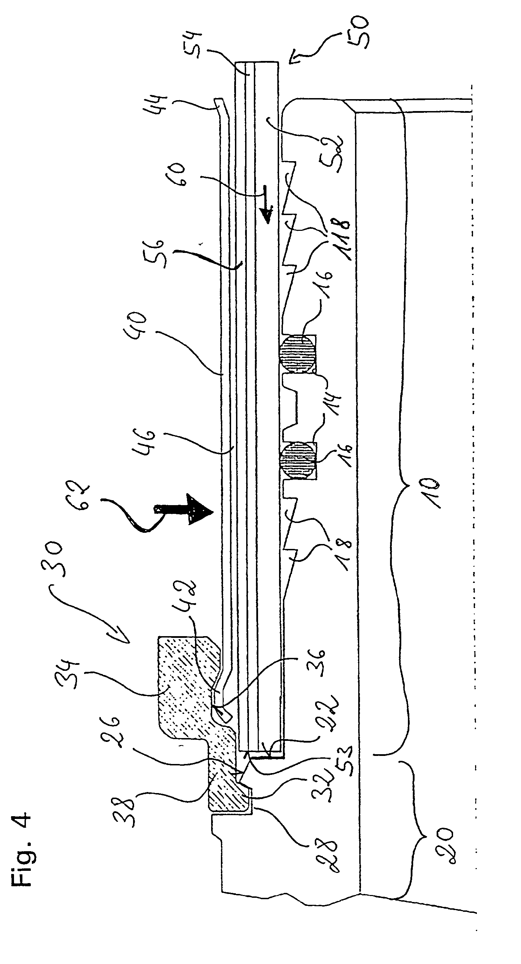

Die in Fig. 4 stellvertretend für sämtliche Anschlußbereiche des in Fig. 3 dargestellten Anschlußelementes im einzelnen dargestellte Form des Anschlußbereichs 10 mit dem entsprechenden Anschlag 20, dem transparenten Kunststoffring 30 und der Preßhülse 40 entspricht im wesentlichen der Form der anhand der Fig. 1 und 2 erläuterten Anschlußbereiche.

Dabei weist die Begrenzungsfläche des in Fig. 4 dargestellten Anschlags 20 angrenzend an die äußere Begrenzungsfläche des Anschlußbereichs 10 eine einen rechten Winkel mit der Zylinderachse einschließende Anlagefläche 22, eine einen spitzen Winkel mit der Zylinderachse einschließende Phase 26 sowie eine die Zylinderachse umlaufende Nut 28 auf, wobei in der Nut 28 der radial nach innen ragende Steg 32 des Kunststoffrings 30 aufgenommen ist.

Dabei wird die Bildung eines galvanischen Elementes zwischen der Metalleinlage 54 des Verbundrohres 50 und dem Anschlußelement 2 zuverlässig ausgeschlossen, weil sowohl der Anschlag 20 als auch der Anschlußbereich 10 aus einem elektrisch isolierenden glasfaserverstärkten Kunststoff gebildet sind.

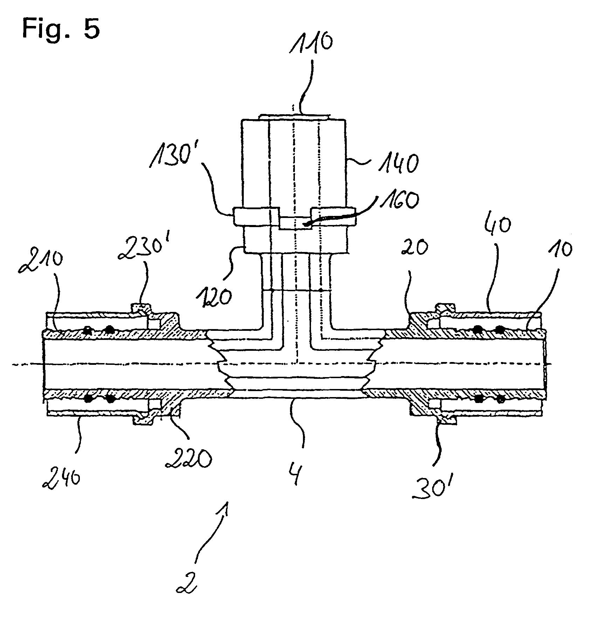

In der zur Erläuterung der vierten Ausführungsform der Erfindung dienenden Fig. 5 sind Elementen der ersten Ausführungsform entsprechende Bauelemente mit gleichen Bezugszeichen versehen. Im Unterschied zur ersten Ausführungsform der Erfindung sind die Verbindungselemente 30', 130' und 230' des Anschlußelementes 2 einstückig mit dem entsprechenden Anschlag, 20, 120 bzw. 220 gebildet. Demnach sind auch die Verbindungselemente 30', 130' und 230' aus undurchsichtigem glasfaserverstärktem Kunststoff hergestellt. Zur Sichtkontrolle der Positionierung der Verbundrohre sind die Verbindungselemente 30', 130' und 230' mit jeweils vier in gleichbleibenden Abständen über den Umfang des entsprechenden Anschlußbereichs 10, 110 bzw. 210 verteilten Sichtfenstern ausgestattet, von denen eines, nämlich das Sichtfenster 160 im Verbindungselement 130' in Fig. 3 dargestellt ist.

Die Erfindung ist nicht auf die anhand der Zeichnung dargestellten Ausführungsformen beschränkt. Beispielsweise ist auch daran gedacht, erfindungsgemäße Anschlußelemente mit nur zwei Anschlußbereichen oder auch nur einem Anschlußbereich herzustellen. Ferner kann anstelle eines aus drei Schichten bestehenden Verbundrohres auch ein aus mehr oder weniger Schichten bestehendes Verbundrohr eingesetzt werden. Schließlich ist auch daran gedacht, das Verbindungselement stoff- und/oder kraftschlüssig am Anschlag festzulegen.

## Patentansprüche

1. Leitungssystem mit einem Metall-Kunstoff-Verbundrohr (50) und einem Anschlusselement (2), auf welches das Verbundrohr aufschiebbar ist, und einen eine Anlagefläche (22) für eine Stirnfläche (53) des Verbundrohres (50) bildenden Anschlag (20, 120, 220) aufweist, wobei die Stirnfläche (53) des Verbundrohres (50) unter Vermeidung eines galvanischen Kontaktes zwischen den metallischen Bestandteilen des Verbundrohres (50) und dem Anschlag (20) unmittelbar an die Anlagefläche (22) des Anschlusselementes (2) anlegbar ist, und mit einer Presshülse zum Festlegen des Verbundrohres am Anschlusselement (2) **dadurch gekennzeichnet, dass**
- die Presshülse (40, 140, 240) am Anschlusselement (2) festlegbar ist, wobei
- das dem Anschlag (20, 120, 220) zugewandte Ende der am Anschlusselement (2) festlegbaren Presshülse (40, 140, 240) einen axialen und radialen Abstand zu der Anlagefläche (22) aufweist, wobei
ein Verbindungselement (30, 130, 230) aus Kunststoff vorgesehen ist, das einerseits am Anschlusselement (2) und andererseits an der Presshülse (40) festlegbar ist und welches die Presshülse (40) am Anschlusselement (2) hält, wobei der axiale und radiale Abstand von dem Verbindungselement übergriffen wird.

2. Leitungssystem nach Anspruch 1, **dadurch gekennzeichnet, dass** der Anschlag (20, 120, 220) die Form eines die Zylinderachse umlaufenden Bundes aufweist.

3. Leitungssystem nach einem der Ansprüche 1 oder 2, **dadurch gekennzeichnet, dass** die den an die Anlagefläche (22) anlegbaren Teil der Stirnfläche (53) bildende Kunststoffschicht (52) eine innere Begrenzungsfläche des Verbundrohres (50) bildet.

4. Leitungssystem nach den Ansprüchen 2 und 3, **dadurch gekennzeichnet, dass** der Außendurchmesser der die innere Begrenzungsfläche des Verbundrohres bildenden Kunststoffschicht (52) mindestens genauso groß ist wie der Außendurchmesser der Anlagefläche (22).

5. Leitungssystem nach einem der vorhergehenden Ansprüche, **dadurch gekennzeichnet, dass** zumindest ein radial innen liegender Bereich der Stirnfläche (153) einen spitzen Winkel mit der Rohrachse einschließt, vorzugsweise kegelstumpfförmig gebildet ist.

6. Leitungssystem nach einem der vorhergehenden Ansprüche **dadurch gekennzeichnet, dass** die Anlagefläche (122) zumindest teilweise einen spitzen Winkel mit der Rohrachse einschließt, vorzugsweise kegelstumpfförmig gebildet ist.

7. Leitungssystem nach einem der Ansprüche 1 bis 6, **dadurch gekennzeichnet, dass** das Verbindungselement (30, 130, 230) zumindest teilweise durchsichtig ist.

8. Leitungssystem nach einem der Ansprüche 1 bis 7, **dadurch gekennzeichnet, dass** das Verbindungselement (30, 130, 230) ein den an die Anlagefläche (22) angrenzenden Teil des Anschlussbereichs (10) übergreifender, transparenter Kunststoffring (30, 130, 230) ist.

9. Leitungssystem nach Anspruch 7 oder 8, **dadurch gekennzeichnet, dass** das Verbindungselement (30, 130, 230) einen radial nach innen ragenden, vorzugsweise umlaufenden Steg (32) aufweist, der in eine vorzugsweise umlaufende Nut (28) des Anschlusselementes (2) aufgenommen ist.

10. Leitungsanschlusssystem nach einem der Ansprüche 7 bis 8, **dadurch gekennzeichnet, dass** das Verbindungselement (30, 130, 230) über einen einen spitzen Winkel mit der Rohrachse einschließenden vorzugsweise etwa kegelstumpfförmig gebildeten Außenflächenbereich (24, 25) des Anschlusselementes (2) auf das Anschlusselement (2) aufschiebbar ist.

11. Leitungssystem nach einem der Ansprüche 1 bis 10, **dadurch gekennzeichnet, dass** der Anschlag (20) zumindest im Bereich der Anlagefläche (22) aus einem elektrisch isolierenden Material gebildet ist.

12. Leitungssystem nach Anspruch 11, **dadurch gekennzeichnet, dass** der Anschlag (20, 120, 220) vollständig aus einem elektrisch isolierenden Material gebildet ist.

13. Leitungssystem nach Anspruch 11 oder 12, **dadurch gekennzeichnet, dass** der etwa kreiszylindermantelförmige Anschlussbereich (10, 110, 210) aus einem elektrisch isolierenden Material gebildet und vorzugsweise einstückig mit dem Anschlag hergestellt ist.

14. Leitungssystem nach einem der Ansprüche 11 bis 13, **dadurch gekennzeichnet, dass** mindestens einer der Anschläge (20, 120, 220) und/oder mindestens einer der Anschlussbereiche (10, 110, 210) aus Kunststoff, vorzugsweise aus glasfaserverstärktem Kunststoff gebildet ist.

15. Leitungssystem nach einem der vorstehenden Ansprüche, wobei das Verbindungselement (40, 140, 240) einen radial nach außen ragenden, umlaufenden Steg (34) aufweist mit dem ein Presswerkzeug während eines Pressvorgangs lagerichtig geführt wird.

## Claims

1. A piping system with a metal/plastic composite pipe (50) and a connection element (2) onto which the composite pipe can be slid, and a stop (20, 120, 220) forming a contact face (22) for a front face (53) of the composite pipe (50), the front face (53) of the composite pipe (50) being positionable directly on the contact face (22) of the connection element (2) avoiding galvanic contact between the metallic components of the composite pipe (50) and the stop (20), and with a ferrule for securing the composite pipe on the connection element (2), **characterised in that**
- the ferrule (40, 140, 240) can be secured on the connection element (2),
- the end of the ferrule (40, 140, 240) securable on the connection element (2) facing towards
the stop (20, 120, 220) being an axial and a radial distance away from the contact surface (22),
a plastic joining element (30, 130, 230) being provided which can on the one hand be secured to the connection element (2) and on the other hand to the ferrule (40), and which holds the ferrule (40) on the connection element (2), the axial and the radial distance being overlapped by the joining element.

2. The piping system according to Claim 1, **characterised in that** the stop (20, 120, 220) is in the form of a flange encompassing the cylinder axis.

3. The piping system according to either of Claims 1 or 2, **characterised in that** the plastic layer (52) forming the part of the front face (53) positionable on the contact face (22) forms an inner limiting face of the composite pipe (50).

4. The piping system according to Claims 2 and 3, **characterised in that** the outer diameter of the plastic layer (52) forming the inner limiting face of the composite pipe (52) is at least as large as the outer diameter of the contact face (22).

5. The piping system according to any of the preceding claims, **characterised in that** at least one radially inwardly lying region of the front face (153) encloses an acute angle with the pipe axis, and is preferably in the shape of a truncated cone.

6. The piping system according to any of the preceding claims, **characterised in that** the contact face (122) encloses at least partially an acute angle with the pipe axis, and is preferably in the form of a truncated cone.

7. The piping system according to any of Claims 1 to 6, **characterised in that** the joining element (30, 130, 230) is at least partially transparent.

8. The piping system according to any of Claims 1 to 7, **characterised in that** the joining element (30, 130, 230) is a transparent plastic ring (30, 130, 230) overlapping the part of the connection region (10) adjacent to the contact face (22).

9. The piping system according to Claim 7 or 8, **characterised in that** the joining element (30, 130, 230) has a radially inwardly projecting, preferably circumferential bar (32) which is accommodated in a preferably circumferential groove (28) of the connection element (2).

10. A piping connection system according to either of Claims 7 or 8, **characterised in that** the joining element (30, 130, 230) can be slid onto the connection element (2) over an outer face region (24, 25), preferably approximately in the shape of a truncated cone, of the connection element (2) enclosing an acute angle with the pipe axis.

11. The piping system according to any of Claims 1 to 10, **characterised in that** the stop (20) is made, at least in the region of the contact face (22), of an electrically insulating material.

12. The piping system according to Claim 11, **characterised in that** the stop (20, 120, 220) is made totally of an electrically insulating material.

13. The piping system according to Claim 11 or 12, **characterised in that** the connection region (10, 110, 210), approximately in the form of circular cylinder cladding, is made of an electrically insulating material and is preferably produced integrally with the stop.

14. The piping system according to any of Claims 11 to 13, **characterised in that** at least one of the stops (20, 120, 220) and/or at least one of the connection regions (10, 110, 210) is made of plastic, preferably of a glass fibre-reinforced plastic.

15. The piping system according to any of the preceding claims, the joining element (40, 140, 240) having a radially outwardly projecting, circumferential bar (34) with which a pressing tool is guided with correct positioning during a pressing process.

## Revendications

1. Système de tuyauterie avec un tube composite métal-plastique (50) et un élément de raccordement (2), sur lequel le tube composite peut être glissé, et qui présente un épaulement (20, 120, 220) formant une surface d'appui (22) pour une surface frontale (53) du tube composite (50), dans lequel la surface frontale (53) du tube composite (50) peut être appliquée directement sur la surface d'appui (22) de l'élément de raccordement (2) tout en évitant un contact galvanique entre les composants métalliques du tube composite (50) et l'épaulement (20), et avec un manchon de pressage pour immobiliser le tube composite sur l'élément de raccordement (2), **caractérisé en ce que**
- le manchon de pressage (40, 140, 240) peut être immobilisé sur l'élément de raccordement (2), dans lequel
- l'extrémité du manchon de pressage (40, 140, 240) pouvant être immobilisé sur l'élément de raccordement (2), tournée vers l'épaulement (20, 120, 220), présente une distance axiale et radiale par rapport à la surface d'appui (22), dans lequel
- il est prévu un élément de jonction (30, 130, 230) en plastique, qui peut être immobilisé d'une part sur l'élément de raccordement (2) et d'autre part sur le manchon de pressage (40) et qui maintient le manchon de pressage (40) sur l'élément de raccordement (2), la distance axiale et radiale étant couverte par l'élément de jonction.

2. Système de tuyauterie selon la revendication 1, **caractérisé en ce que** l'épaulement (20, 120, 220) présente la forme d'un bourrelet entourant l'axe du cylindre.

3. Système de tuyauterie selon l'une quelconque des revendications 1 ou 2, **caractérisé en ce que** la couche de plastique (52) formant la partie de la surface frontale (53) applicable sur la surface d'appui (22) forme une surface de limitation interne du tube composite (50).

4. Système de tuyauterie selon les revendications 2 et 3, **caractérisé en ce que** le diamètre extérieur de la couche de plastique (52) formant la surface de limitation interne du tube composite est au moins aussi grand que le diamètre extérieur de la surface d'appui (22).

5. Système de tuyauterie selon l'une quelconque des revendications précédentes, **caractérisé en ce qu'**au moins une zone de la surface frontale (153), située radialement à l'intérieur, forme un angle aigu avec l'axe du tube, et est de préférence de forme tronconique.

6. Système de tuyauterie selon l'une quelconque des revendications précédentes, **caractérisé en ce que** la surface d'appui (22) forme au moins en partie un angle aigu avec l'axe du tube, et est de préférence de forme tronconique.

7. Système de tuyauterie selon l'une quelconque des revendications 1 à 6, **caractérisé en ce que** l'élément de jonction (30, 130, 230) est au moins en partie transparent.

8. Système de tuyauterie selon l'une quelconque des revendications 1 à 7, **caractérisé en ce que** l'élément de jonction (30, 130, 230) est une bague de plastique transparente (30, 130, 230), recouvrant la partie de la zone de raccordement (10) adjacente à la surface d'appui (22).

9. Système de tuyauterie selon la revendication 7 ou la revendication 8, **caractérisé en ce que** l'élément de jonction (30, 130, 230) présente une nervure (32) orientée radialement vers l'intérieur, et de préférence périphérique, qui est logée dans une rainure (28) de préférence périphérique de l'élément de raccordement (2).

10. Système de raccordement de tuyauterie selon l'une quelconque des revendications 7 à 8, **caractérisé en ce que** l'élément de jonction (30, 130, 230) peut être glissé sur l'élément de raccordement (2) sur une zone de surface extérieure (24, 25) de l'élément de raccordement (2) formant un angle aigu avec l'axe du tube, et étant de préférence environ de forme tronconique.

11. Système de tuyauterie selon l'une quelconque des revendications 1 à 10, **caractérisé en ce que** l'épaulement (20) est formé en une matière électriquement isolante au moins dans la région de la surface d'appui (22).

12. Système de tuyauterie selon la revendication 11, **caractérisé en ce que** l'épaulement (20, 120, 220) est formé entièrement d'une matière électriquement isolante.

13. Système de tuyauterie selon la revendication 11 ou la revendication 12, **caractérisé en ce que** la zone de raccordement (10, 110, 210) sensiblement en forme d'enveloppe cylindrique circulaire, est formée d'une matière électriquement isolante et est de préférence fabriquée d'une seule pièce avec l'épaulement.

14. Système de tuyauterie selon l'une quelconque des revendications 11 à 13, **caractérisé en ce qu'**au moins un des épaulements (20, 120, 220) et/ou au moins une des zones de raccordement (10, 110, 210) est formé(e) de plastique, de préférence de plastique renforcé de fibres de verre.

15. Système de tuyauterie selon l'une quelconque des revendications précédentes, dans lequel l'élément de jonction (40, 140, 240) présente une nervure périphérique (34) orientée radialement vers l'extérieur, avec laquelle un outil de pressage est guidé en position correcte pendant une opération de pressage.
